# EUROPÄISCHE PATENTSCHRIFT

(11) **EP 4 466 148 B1**
(45) Veröffentlichungstag und Bekanntmachung des Hinweises auf die Patenterteilung: **08.10.2025**
(21) Anmeldenummer: 22755072.0
(22) Anmeldetag: 25.07.2022
(51) Int. Cl.: B60H 1/00, F24F 1/0063, F24F 1/0323, F24F 13/30

(54) **KLIMAANLAGE SOWIE VERFAHREN ZUR FERTIGUNG EINER KLIMAANLAGE**
AIR CONDITIONING SYSTEM AND METHOD FOR MANUFACTURING AN AIR CONDITIONING SYSTEM
SYSTÈME DE CLIMATISATION ET PROCÉDÉ DE FABRICATION D'UN SYSTÈME DE CLIMATISATION

(30) Priorität: 18.01.2022 DE 102022000174
(43) Veröffentlichungstag der Anmeldung: 27.11.2024
(73) Patentinhaber: Truma Gerätetechnik GmbH & Co. KG, 85640 Putzbrunn (DE)
(72) Erfinder: MOSER, Matthäus, 85640 Putzbrunn (DE)
(74) Vertreter: Prinz & Partner mbB
(86) Internationale Anmeldenummer: PCT/EP2022/000064
(87) Internationale Veröffentlichungsnummer: WO 2023/138746

(56) Entgegenhaltungen:
- WO-A1-2005/100058
- JP-A- 2007 001 329
- JP-A- 2014 240 259

## Beschreibung

Die vorliegende Erfindung betrifft eine Klimaanlage. Beispielsweise handelt es sich um eine auf dem Dach eines Fahrzeugs (z. B. eines Wohnmobils oder eines Wohnwagens) zu befestigende Klimaanlage. Weiterhin bezieht sich die Erfindung auf ein Verfahren zur Fertigung einer Klimaanlage.

Das der Luftkühlung zugrundeliegende Prinzip der Kälteerzeugung mittels eines Kühlkreislaufs ist beispielsweise in der WO 2007/042065 A1 beschrieben. Vorhanden sind in solchen Klimaanlagen zumeist zwei Gebläse und zwei Wärmetauscher: Ein Gebläse und ein zugeordneter Wärmetauscher gehören zum Verdampfer, in dem die Luft des zu kühlenden Raumes durch die Wechselwirkung mit dem Kältemittel abgekühlt wird. Ein weiteres Gebläse und ein zugeordneter Wärmetauscher gehören zum Verflüssiger, in welchem thermische Energie des Kältemittels auf die Umgebungsluft übertragen und somit abgeführt wird.

Lamellen-Wärmetauscher - wie sie beispielsweise in der WO 2017/108289 A1 beschrieben sind - bestehen aus Finnen, die mit Rohren verbunden sind. In den Rohren wird das Kältemittel geführt. Am Ende der Rohre sind Endplatten (sogenannte Endplates) angebracht, mit denen der Wärmetauscher im Gehäuse fixiert wird. Auf einer Außenseite der Endplatten befinden sich Rohrbögen, die die Rohre miteinander für das Kältemittel verbinden. Der Wärmetauscher hat somit einen inneren Bereich zwischen den Endplatten und zwei Stirnseiten jenseits der Endplatten. Die Wärmetauscher sind beispielsweise gemäß der WO 2007/042065 A1 mit ihren Endplatten im EPP-Gehäuse fixiert.

Bei der Verwendung von entflammbaren Kältemitteln wird die Klimaanlage in der Regel in zwei Bereiche unterteilt, die dem Innenraum (sogenannter Indoor-Bereich) bzw. der Umwelt (sogenannter Outdoor-Bereich) zugeordnet sind. Die Luft des Innenraums wird durch die Klimaanlage gekühlt. Die beiden Bereiche werden dabei voneinander getrennt und es wird dafür Sorge getragen, dass möglicherweise austretendes Kühlmittel nicht in den Bereich gelangt, der dem Innenraum zugeordnet ist. Bei den Wärmetauschern ist daher eine Dichtung zu erzeugen zwischen dem inneren Bereich und den Stirnseiten jenseits der Endplatten, die insbesondere die Rohrbögen aufweisen. Für die Dichtung verfügen die Endplatten in der Regel über umgebogene Längsseiten, die eine größere Dichtfläche ermöglichen. Problematisch bei Abdichtungen sind üblicherweise Herstellungs- und Fertigungstoleranzen.

Die WO 2019/115730 A1 beschreibt beispielsweise ein Lüftungsgerät, in welchem ein Wärmeübertrager durch eine Verkeileinheit fixiert ist.

Die WO 2005/100058 A1 zeigt eine Klimaanlage nach dem Oberbegriff des Anspruchs 1.

Ferner zeigen die JP 2007 001329 A sowie die JP 2014 240259 A Klimaanlagen.

Die der Erfindung zugrundeliegende Aufgabe besteht darin, eine Klimaanlage mit einer möglichst zuverlässigen Dichtung zwischen dem inneren Bereich und den Stirnseiten eines Wärmetauschers vorzuschlagen.

Die Aufgabe wird gelöst durch eine Klimaanlage gemäß dem unabhängigen Anspruch 1 sowie durch ein Verfahren zur Fertigung einer Klimaanlage gemäß dem unabhängigen Anspruch 5. Vorteilhafte Ausgestaltungen der Erfindung ergeben sich aus den Unteransprüchen.

Die Erfindung löst die Aufgabe durch eine Klimaanlage mit einem Gehäuse, mindestens einem Wärmetauscher und einer Haltevorrichtung, wobei die Haltevorrichtung den Wärmetauscher in dem Gehäuse fixiert, wobei die Haltevorrichtung einen Grundkörper mit mindestens einer Aussparung und mindestens ein Verspannelement aufweist, und wobei die Haltevorrichtung und der Wärmetauscher so ausgestaltet und relativ zueinander angeordnet sind, dass der Grundkörper und/oder das Verspannelement, mittelbar oder unmittelbar, dichtend an dem Wärmetauscher anliegen/anliegt.

Bei der erfindungsgemäßen Klimaanlage wird eine dichtende Verbindung zwischen dem Wärmetauscher und einem Grundkörper der Haltevorrichtung und/oder einem in den Grundkörper eingebrachten Verspannelement erzeugt. Der Grundkörper und/oder das Verspannelement haben/hat somit je nach Ausgestaltung unmittelbar Kontakt mit dem Wärmetauscher oder es befindet sich eine andere, z. B. ebenfalls abdichtende Komponente zwischen Wärmetauscher und Grundkörper bzw. Verspannelement.

Erfindungsgemäß ist vorgesehen, dass in einer relativen Orientierung zwischen Verspannelement und Aussparung der Grundkörper so verformt ist, dass der verformte Grundkörper dichtend an dem Wärmetauscher anliegt. Mit anderen Worten sieht diese erfindungsgemäße Ausgestaltung vor, dass das Verspannelement derartig in der Aussparung orientiert ist, dass der Grundkörper verformt ist, und dass der verformte Grundkörper dichtend an dem Wärmetauscher anliegt. In dieser erfindungsgemäßen

Ausgestaltung ergibt sich durch die relative Orientierung zwischen Verspannelement und Aussparung, dass der Grundkörper eine Verformung erfährt. Dabei gibt es eine alternative Orientierung des Verspannelements in der Aussparung, bei welcher keine oder eine so geringe Verformung stattfindet, dass der Grundkörper nicht am Wärmetauscher anliegt. Die erfindungsgemäße Ausgestaltung vereinfacht es im Servicefall, den Wärmetauscher aus der Klimaanlage herauszunehmen und anschließend eine gleichbleibende Dichtwirkung erneut zu erzeugen. Das Verspannelement muss entsprechend zwischen den zwei Orientierungen bewegt werden. Vorzugsweise gibt es nur eine Orientierung, bei der der Grundkörper dichtend an dem Wärmetauscher anliegt.

In einer Ausgestaltung ist die Aussparung als Bohrung ausgeführt. In einer alternativen oder ergänzenden Ausgestaltung ist das Verspannelement als Stift ausgeführt.

Wodurch das dichtende Anliegen des Grundkörpers bzw. des Verspannelements an dem Wärmetauscher gegeben ist bzw. bewirkt wird, ist Gegenstand der folgenden Ausgestaltungen.

In einer Ausgestaltung verfügt das Verspannelement in zumindest einer Richtung über eine größere Ausdehnung als die Aussparung. Durch das Übermaß verformt sich der Grundkörper und liegt an dem Wärmetauscher dichtend an. Für dieses Zweck sind die Materialien des Grundkörpers (zumindest um die Aussparung herum) und des Verspannelements so aufeinander abgestimmt, dass das Übermaß stärker den Grundkörper als das Verspannelement verformt.

In einer Ausgestaltung wird das Verspannelement für den Wechsel zwischen den Orientierungen relativ zu der Aussparung um eine Längsachse gedreht, um die Verformung zu erreichen.

In einer Ausgestaltung weist entweder die Aussparung oder das Verspannelement eine asymmetrische Innen- bzw. Außenkontur auf. Beispielsweise haben die Aussparung und das Verspannelement eine ovale Grundform mit dem gleichen Flächeninhalt, wobei Aussparung und Verspannelement jeweils eine zylindrische Form aufweisen. Bei einer Drehposition sind Aussparung und Verspannelement passgenau, sodass keine Materialverdrängung stattfindet. Bei einer Drehung - für eine Änderung der Orientierung - beispielsweise um 90° um eine Längsachse von Aussparung und Verspannelement (und somit bei einer durch die Drehung erzeugten zweiten Drehposition) wird das Material des Grundkörpers nach außen und damit in Richtung des Wärmetauschers bewegt bzw. verdrängt.

In einer Ausgestaltung sind die Aussparung und der Abstand zu dem Bereich, mit welchem der Grundkörper an dem Wärmetauscher anliegt, so ausgestaltet und aufeinander abgestimmt, dass der Anteil des Grundkörpers zwischen der Aussparung und dem Bereich eine möglichst flexible Engstelle bildet. Bei dieser Ausgestaltung wird vorzugsweise ein Material für den Grundkörper verwendet, welches eine flexible Verformung erlaubt.

Gemäß einer alternativen oder ergänzenden Ausgestaltung ist vorgesehen, dass das Verspannelement derartig in der Aussparung angeordnet ist, dass das Verspannelement aus der Aussparung herausragt, und dass das Verspannelement dichtend an dem Wärmetauscher anliegt. In dieser Ausgestaltung befindet sich das Verspannelement teilweise außerhalb der Aussparung und gerät dadurch in den dichtenden Kontakt mit dem Wärmetauscher. Für die dichtende Funktion verfügt das Verspannelement in einer Ausgestaltung über eine Art von Dichtlippe.

In einer Ausgestaltung sind zwei Aussparungen im Grundkörper und zwei zugeordnete Verspannelemente vorhanden. Die Aussparungen und zugeordneten Verspannelemente sind dabei vorzugsweise einer gemeinsamen Endplatte des Wärmetauschers zugeordnet.

Eine Ausgestaltung der Klimaanlage sieht vor, dass der Grundkörper zwei Aussparungen aufweist, und dass die zwei Aussparungen symmetrisch relativ zum Wärmetauscher angeordnet sind. Beispielsweise liegen die Aussparungen auf einer Höhe entlang der Längsachse des Wärmetauschers und haben den im Wesentlichen gleichen Abstand zu der Längsachse.

Eine Ausgestaltung der Klimaanlage beinhaltet, dass der Grundkörper eine Ausstülpung in Richtung des Wärmetauschers aufweist, und dass der Grundkörper zumindest mit der Ausstülpung an dem Wärmetauscher anliegt. In dieser Ausgestaltung verfügt der Grundkörper über eine Art von Erhebung, die durch ihre geometrische Form und Anordnung in Richtung des Wärmetauschers weist und die dichtend am Wärmekörper zur Anlage kommt.

Eine Ausgestaltung der Klimaanlage sieht vor, dass die Aussparung parallel zu einem Bereich verläuft, an dem der Grundkörper und/oder das Verspannelement an dem Wärmetauscher anliegt. Die Aussparung ist in dieser Ausgestaltung parallel zur Anlagefläche des Grundkörpers bzw. des Verspannelements am Wärmetauscher geführt. Somit wird die Abdichtung über den gesamten Kontaktbereich erzielt. In einer Ausgestaltung ist die Aussparung eine lotrechte Bohrung bzw. ein vertikal verlaufendes Loch.

Eine Ausgestaltung der Klimaanlage beinhaltet, dass das Verspannelement als kreiszylindrischer Stab ausgestaltet ist. Die Form des Verspannelements vereinfacht dessen Herstellung und reduziert den Aufwand bei der Montage der Klimaanlage. Das Übermaß wird bei dieser Ausgestaltung vorzugsweise dadurch erzeugt, dass die Grundfläche des Verspannelements größer als die Grundfläche der Aussparung ist.

Eine alternative Ausgestaltung der Klimaanlage sieht vor, dass das Verspannelement als zylindrischer Stab mit einer ovalen Grundfläche ausgestaltet ist. Bei der ovalen Grundfläche wird das Übermaß in einer Ausgestaltung dadurch erzeugt, dass die Grundfläche des Verspannelements in wenigstens einer Richtung größer als die Innenfläche der Aussparung ist. Alternativ oder ergänzend wird das Verspannelement relativ zu der Aussparung verdreht. So hat beispielsweise in einer Ausgestaltung die Aussparung ebenfalls eine ovale Grundfläche mit den gleichen Abmessungen wie die des Verspannelements. Das Übermaß wird dabei durch ein Verdrehen zueinander erzeugt.

Eine Ausgestaltung der Klimaanlage beinhaltet, dass die Aussparung kreiszylindrisch ausgestaltet ist. Die Aussparung ist somit in dieser Ausgestaltung von zylindrischer Form mit einer kreiszylindrischen Grundfläche.

Eine alternative Ausgestaltung der Klimaanlage sieht vor, dass die Aussparung zylindrisch mit einer ovalen Grundfläche ausgestaltet ist.

Ist die Aussparung zylindrisch ausgeführt, so verläuft in einer Ausgestaltung die Längsachse des Zylinders parallel zu der Berührungsfläche von Wärmetauscher und Grundkörper.

Gemäß einer Ausgestaltung verfügt die Aussparung über eine seitliche Öffnung. Die seitliche Öffnung erlaubt es beispielweise, dass das Verspannelement über die Aussparung - insbesondere seitlich - hinausragt. Insbesondere erstreckt sich die seitliche Öffnung bis zur Berandung des Grundkörpers. Die Öffnung ist in einer Ausgestaltung ein Längsschlitz, der sich über die gesamte Länge der Aussparung erstreckt.

Eine Ausgestaltung der Klimaanlage beinhaltet, dass der Wärmetauscher mindestens eine stirnseitige Endplatte aufweist, und dass der Grundkörper und/oder das Verspannelement in einem Bereich um die stirnseitige Endplatte anliegt. Liegt der Grundkörper und/oder das Verspannelement an der Endplatte an, so ergibt sich durch die Abdichtung die Trennung des Bereichs um die Stirnseite des Wärmetauschers von dem inneren Bereich des Wärmetauschers zwischen den zwei Endplatten.

In einer Ausgestaltung verfügt der Grundkörper über mehrere Aussparungen und zugeordnete Verspannelemente, wobei die Aussparungen sich in den Bereichen der Endplatten befinden. In einer Ausgestaltung sind vier Aussparungen vorhanden, die sich an den vier Längsseiten der zwei Endplatten befinden.

Eine Ausgestaltung der Klimaanlage sieht vor, dass der Grundkörper ein integraler Bestandteil des Gehäuses ist. In dieser Ausgestaltung besteht das Gehäuse beispielweise aus einem geschäumten Kunststoff (z. B. EPP), in welchen die Komponenten der Klimaanlage eingebracht sind. Der Grundkörper gehört dabei zu diesem Gehäuse, das passend zu der Haltevorrichtung dimensioniert ist. Eine Ausgestaltung besteht darin, dass das Gehäuse zumindest im Bereich der Aufnahme aus einem geschäumten Kunststoff besteht. Ein geschäumter Kunststoff ist beispielsweise EPP, bei dem es sich um expandiertes Polypropylen handelt.

In einer alternativen Ausgestaltung ist der Grundkörper eine separate Einheit, die in dem Gehäuse angeordnet und fixiert ist.

Weiterhin löst die Erfindung die Aufgabe durch ein Verfahren zur Fertigung einer Klimaanlage, wobei ein Wärmetauscher in einen Grundkörper einer Haltevorrichtung eingebracht wird, und wobei in mindestens eine Aussparung des Grundkörpers mindestens ein Verspannelement derartig eingebracht wird, dass sich der Grundkörper und/oder das Verspannelement an den Wärmetauscher dichtend anlegt. Das Verspannelement wird dabei derartig in der Aussparung orientiert, dass in einer relativen Orientierung zwischen Verspannelement und Aussparung der Grundkörper so verformt ist, dass der verformte Grundkörper dichtend an dem Wärmetauscher anliegt und in einer alternativen Orientierung des Verspannelements in der Aussparung keine oder eine so geringe Verformung des Grundkörpers stattfindet, dass der Grundkörper nicht am Wärmetauscher anliegt.

Erfindungsgemäß wird die Abdichtung des Wärmetauschers bei der Fertigung der Klimaanlage erzeugt. Zunächst wird der Wärmetauscher in einen Grundkörper einer Haltevorrichtung eingebracht. Der Grundkörper kann dabei in einer Ausgestaltung ein integraler Teil des Gehäuses der Klimaanlage sein. Im nächsten Schritt wird ein Verspannelement in die Aussparung eingebracht, wodurch der Grundkörper oder der Grundkörper und das Verspannelement mit dem Wärmetauscher in Kontakt kommen/kommt.

Die vorgenannten und folgenden Ausgestaltungen der Klimaanlage gelten entsprechend auch für das Verfahren und umgekehrt. Daher wird auf einer Wiederholung verzichtet.

Eine Ausgestaltung des Verfahrens sieht vor, dass während des Einbringens des Verspannelements in die Aussparung das Verspannelement gedreht wird. In dieser Ausgestaltung wird das Verspannelement eingebracht und dann gedreht oder mit einer drehenden Bewegung in die Aussparung eingebracht. Diese Ausgestaltung bezieht sich insbesondere auf die Ausgestaltung der Klimaanlage, bei welcher es zwei unterschiedliche Orientierungen zwischen Aussparung und Verspannelement gibt, wobei eine Orientierung bewirkt, dass der Grundkörper und/oder das Verspannelement dichtend an dem Wärmetauscher anliegt.

Im Einzelnen gibt es eine Vielzahl von Möglichkeiten, die erfindungsgemäße Klimaanlage und das erfindungsgemäße Verfahren auszugestalten und weiterzubilden. Dazu wird verwiesen einerseits auf die den unabhängigen Patentansprüchen nachgeordneten Patentansprüche, andererseits auf die folgende Beschreibung von Ausführungsbeispielen in Verbindung mit der Zeichnung. Es zeigen:
- Fig. 1: eine schematische Prinzip-Darstellung einer Klimaanlage,
- Fig. 2: a) und b) eine räumliche Darstellung einer Klimaanlage gemäß einer ersten Ausführung sowie einen vergrößerten Ausschnitt davon,
- Fig. 3: a) und b) eine räumliche Darstellung eines Ausschnitts einer zweiten Ausführung der Klimaanlage sowie eine angeschnittene Darstellung des Abschnitts,
- Fig. 4: eine räumliche Darstellung eines Ausschnitts einer dritten Ausführung der Klimaanlage und
- Fig. 5: eine räumliche Darstellung eines Ausschnitts einer vierten Ausführung der Klimaanlage.

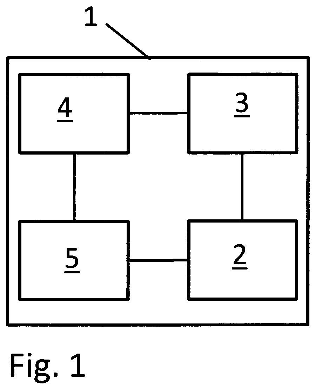

Die Fig. 1 zeigt schematisch den Aufbau einer Klimaanlage zum Kühlen eines Raumes. Die Klimaanlage ist beispielsweise auf dem Dach eines Wohnwagens oder eines Wohnmobils montiert. Der realisierte Kühlkreislauf oder Kälteprozess ist beispielsweise in der WO 2007/042065 A1 beschrieben. Die beteiligten Komponenten befinden sich dabei in einem Gehäuse 1, mit welchem die Positionierung auf dem Dach stattfindet. In dem Kühlkreis verdichtet ein Kompressor (eine alternative Bezeichnung ist Verdichter) 2 ein gasförmiges Kältemittel, das sich erwärmt und über eine Kältemittelleitung zu einem Verflüssiger (alternative Bezeichnung: Kondensator) 3 transportiert wird. Im Verflüssiger 3 wird die Wärme des Kältemittels - über einen Wärmetauscher - an die Umgebungsluft (oder Außenluft) aus der Umgebung um den Raum herum abgegeben. Das flüssige und weiterhin unter hohem Druck stehende Kältemittel wird in einer Expansionseinrichtung 4, die z. B. als Drossel ausgestaltet ist, auf einen niedrigeren Druck entspannt, wodurch es abkühlt. Im Verdampfer 5 wird über einen weiteren Wärmetauscher die Luft gekühlt, indem sie ihre thermische Energie auf das Kältemittel überträgt. Dadurch geht das Kältemittel in den gasförmigen Zustand über. Das gasförmige Kältemittel gelangt schließlich zurück zu dem Kompressor 2, sodass der Kühlkreislauf fortgeführt werden kann. Der Kreislauf lässt sich auch umkehren, sodass die Vorrichtung als Raumheizung dient. In diesem Fall fungiert der oben beschriebene Verflüssiger 3 als Verdampfer und dient umgekehrt der Verdampfer 5 als Verflüssiger.

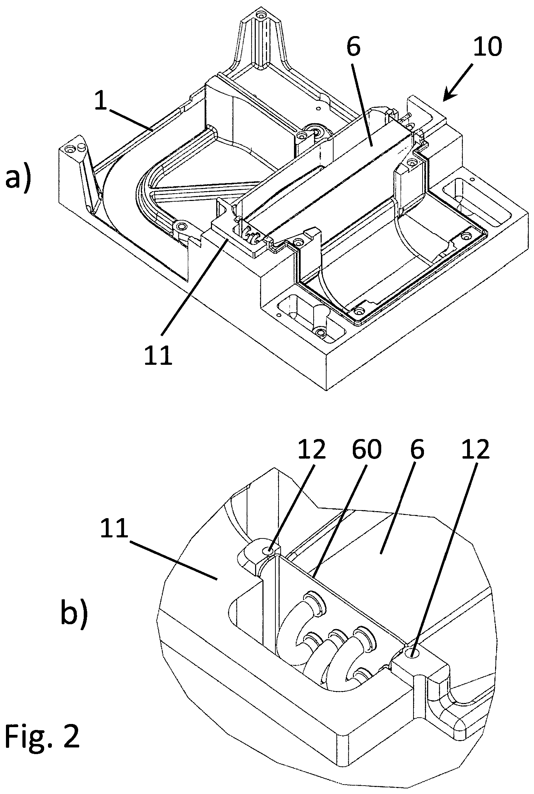

In der Fig. 2 a) und b) ist ein Teil der Klimaanlage mit dem Gehäuse 1 und dem Wärmetauscher 6 dargestellt. Die anderen Komponenten sind für die Übersichtlichkeit weggelassen. Der Wärmetauscher 6 dient dabei dem Kühlen der Innenluft, die durch das Gehäuse 1 geführt wird. Der Wärmetauscher 6 wird von einer Haltevorrichtung 10 gehalten, deren Grundkörper 11 hier ein integraler Bestandteil des Gehäuses 1 ist. Das Gehäuse 1 ist dabei aus EPP gefertigt.

Die Vergrößerung in der Fig. 2 b) zeigt den Bereich, in welchem die Haltevorrichtung 10 die Stirnseite des Wärmetauschers 6 gegenüber dem inneren Bereich des Wärmetauschers 6 abdichtet. Dafür liegt in dieser Ausgestaltung der Grundkörper 11 zu beiden Seiten dichtend an der Endplatte 60 des Wärmetauschers 6 an. Zu erkennen sind die beiden Aussparungen 12, die hier als Löcher im Grundkörper 11 ausgestaltet sind und die sich symmetrisch auf der Höhe der Endplatte 60 befinden.

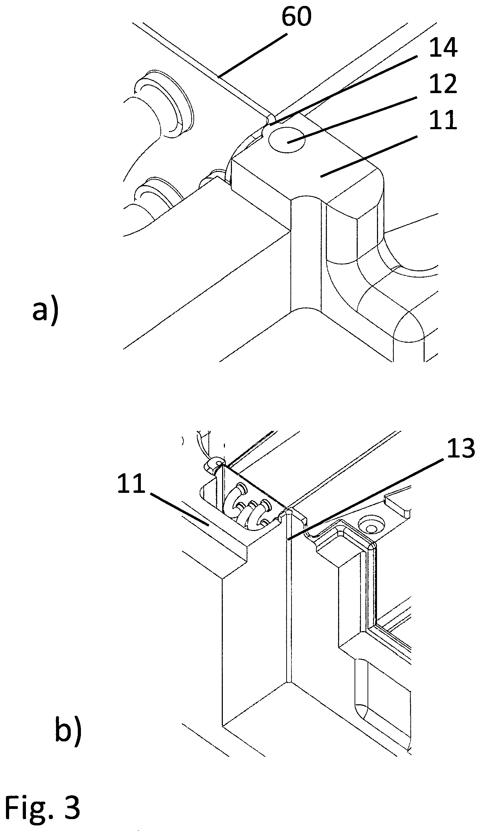

Die Fig. 3 a) und b) zeigt eine alternative Ausgestaltung, bei der sich auf der Höhe der Endplatte 60 oder genauer: auf der Höhe der seitlich abgewinkelten Längsseite der Endplatte 60 am Grundkörper 11 eine Ausstülpung 14 befindet. Die Aussparung 12 verfügt über eine zylindrische Form mit einer kreisförmigen Grundfläche.

Wird - wie in der Fig. 3 b) gezeigt - ein stabförmiges Verspannelement 13 mit einer größeren Grundfläche als die der Aussparung 12 eingebracht, so wird das Material des Grundkörpers 11 in Richtung der Endplatte 60 verdrängt. Indem die Dimensionierungen und Abstände passend aufeinander abgestimmt sind, legt sich der Grundkörper 12 mit der Ausstülpung 14 dichtend an die Endplatte 60 an.

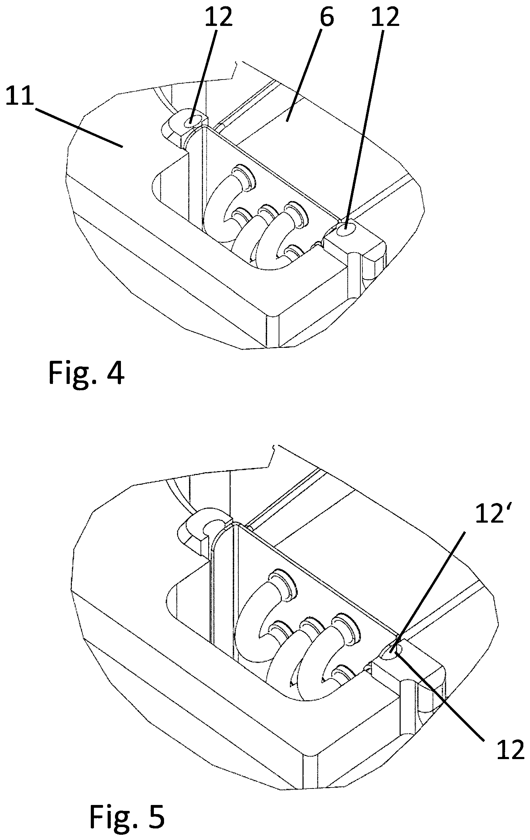

Die Fig. 4 zeigt Aussparungen 12, welche ebenfalls zylindrisch sind und über eine ovale Grundfläche verfügen. Wird in diese Aussparungen 12 ein Verspannelement mit gleicher oder geringfügig kleinerer Grundfläche eingebracht, so gibt es zumindest zwei Orientierungen zwischen Aussparung 12 und Verspannelement: in einem Fall gibt es kein Übermaß, sodass der Grundkörper 11 nicht verformt wird und nicht am Wärmetauscher 6 anliegt. In diesem Fall kann der Wärmetauscher 6 beispielweise entfernt werden. Wird das Verspannelement jedoch um seine Längsachse relativ zur Aussparung 12 gedreht, so wird das Material des Grundkörpers 11 verdrängt und legt sich dichtend an den Wärmetauscher 6 an. Die Dichtung kann somit einfach aufgehoben und wiederhergestellt werden.

In der Fig. 5 verfügt die Aussparung 12 über eine seitliche Öffnung 12', durch die das passende Verspannelement herausragen und an der Endplatte 60 anliegen kann.

## Patentansprüche

1. Klimaanlage,
mit einem Gehäuse (1), mindestens einem Wärmetauscher (6) und einer Haltevorrichtung (10),
wobei die Haltevorrichtung (10) den Wärmetauscher (6) in dem Gehäuse (1) fixiert,
wobei die Haltevorrichtung (10) einen Grundkörper (11) mit mindestens einer Aussparung (12) und mindestens ein Verspannelement (13) aufweist, und
wobei die Haltevorrichtung (10) und der Wärmetauscher (6) so ausgestaltet und relativ zueinander angeordnet sind, dass der Grundkörper (11) und/oder das Verspannelement (13), mittelbar oder unmittelbar, dichtend an dem Wärmetauscher (6) anliegen/anliegt,
**dadurch gekennzeichnet, dass** das Verspannelement (13) derartig in der Aussparung (12) orientiert werden kann, dass in einer relativen Orientierung zwischen Verspannelement (13) und Aussparung (12) der Grundkörper (11) so verformt ist, dass der verformte Grundkörper (11) dichtend an dem Wärmetauscher (6) anliegt und in einer alternativen Orientierung des Verspannelements (13) in der Aussparung (12) keine oder eine so geringe Verformung des Grundkörpers (11) stattfindet, dass der Grundkörper (11) nicht am Wärmetauscher (6) anliegt.

2. Klimaanlage nach Anspruch 1,
wobei der Grundkörper (11) eine Ausstülpung (14) in Richtung des Wärmetauschers (6) aufweist, und
wobei der Grundkörper (11) zumindest mit der Ausstülpung (14) an dem Wärmetauscher (6) anliegt.

3. Klimaanlage nach Anspruch 1 oder 2,
wobei der Grundkörper (11) zwei Aussparungen (12) aufweist, und
wobei die zwei Aussparungen (12) symmetrisch relativ zum Wärmetauscher (6) angeordnet sind.

4. Klimaanlage nach einem der Ansprüche 1 bis 3,
wobei die Aussparung (12) eine seitliche Öffnung (12') aufweist.

5. Verfahren zur Fertigung einer Klimaanlage,
wobei ein Wärmetauscher (6) in einen Grundkörper (11) einer Haltevorrichtung (10) eingebracht wird, und
wobei in mindestens eine Aussparung (12) des Grundkörpers (11) mindestens ein Verspannelement (13) derartig eingebracht wird, dass sich der Grundkörper (11) und/oder das Verspannelement (13) an den Wärmetauscher (6) dichtend anlegt,
**dadurch gekennzeichnet, dass** das Verspannelement (13) derartig in der Aussparung (12) orientiert wird, dass in einer relativen Orientierung zwischen Verspannelement (13) und Aussparung (12) der Grundkörper (11) so verformt ist, dass der verformte Grundkörper (11) dichtend an dem Wärmetauscher (6) anliegt und in einer alternativen Orientierung des Verspannelements (13) in der Aussparung (12) keine oder eine so geringe Verformung des Grundkörpers (11) stattfindet, dass der Grundkörper (11) nicht am Wärmetauscher (6) anliegt.

6. Verfahren nach Anspruch 5,
wobei während des Einbringens des Verspannelements (13) das Verspannelement (13) gedreht wird.

## Claims

1. An air conditioning system,
comprising a housing (1), at least one heat exchanger (6) and a holding device (10),
wherein the holding device (10) fixes the heat exchanger (6) in the housing (1),
wherein the holding device (10) has a base body (11) having at least one recess (12) and at least one clamping member (13), and
wherein the holding device (10) and the heat exchanger (6) are configured and arranged relative to each other such that the base body (11) and/or the clamping member (13) are/is, indirectly or directly, in sealing contact with the heat exchanger (6),
**characterized in that** the clamping member (13) can be oriented in the recess (12) such that in a relative orientation between the clamping member (13) and the recess (12), the base body (11) is deformed such that the deformed base body (11) is in sealing contact with the heat exchanger (6), and in an alternative orientation of the clamping member (13) in the recess (12), no or such a small deformation of the base body (11) occurs that the base body (11) is not in contact with the heat exchanger (6).

2. The air conditioning system according to claim 1,
wherein the base body (11) has a protuberance (14) in the direction of the heat exchanger (6), and
wherein the base body (11) is in contact with the heat exchanger (6) at least with the protuberance (14).

3. The air conditioning system according to claim 1 or 2,
wherein the base body (11) has two recesses (12), and
wherein the two recesses (12) are arranged symmetrically relative to the heat exchanger (6).

4. The air conditioning system according to any of claims 1 to 3,
wherein the recess (12) has a lateral opening (12').

5. A method of manufacturing an air conditioning system,
wherein a heat exchanger (6) is inserted into a base body (11) of a holding device (10), and
wherein at least one clamping member (13) is inserted into at least one recess (12) of the base body (11) such that the base body (11) and/or the clamping member (13) come(s) into sealing contact with the heat exchanger (6),
**characterized in that** the clamping member (13) is oriented in the recess (12) such that in a relative orientation between the clamping member (13) and the recess (12), the base body (11) is deformed such that the deformed base body (11) is in sealing contact with the heat exchanger (6), and in an alternative orientation of the clamping member (13) in the recess (12), no or such a small deformation of the base body (11) occurs that the base body (11) is not in contact with the heat exchanger (6).

6. The method according to claim 5,
wherein the clamping member (13) is rotated during insertion of the clamping member (13).

## Revendications

1. Système de climatisation,
comprenant un boîtier (1), au moins un échangeur de chaleur (6) et un dispositif de retenue (10),
le dispositif de retenue (10) fixant l'échangeur de chaleur (6) dans le boîtier (1),
le dispositif de retenue (10) comportant un corps de base (11) présentant au moins un évidement (12) et au moins un élément de serrage (13), et
le dispositif de retenue (10) et l'échangeur de chaleur (6) étant réalisés et agencés l'un par rapport à l'autre de telle sorte que le corps de base (11) et/ou l'élément de serrage (13) s'appuie/s'appuient indirectement ou directement de manière étanche sur l'échangeur de chaleur (6),
**caractérisé en ce que** l'élément de serrage (13) est apte à être orienté dans l'évidement (12) de telle sorte que, dans une orientation relative entre l'élément de serrage (13) et l'évidement (12), le corps de base (11) est déformé de telle sorte que le corps de base (11) déformé s'appuie de manière étanche sur l'échangeur de chaleur (6), et dans une orientation alternative de l'élément de serrage (13) dans l'évidement (12), aucune déformation ou une déformation si faible du corps de base (11) se produit que le corps de base (11) ne s'appuie pas sur l'échangeur de chaleur (6).

2. Système de climatisation selon la revendication 1,
le corps de base (11) présentant une protubérance (14) en direction de l'échangeur de chaleur (6), et
le corps de base (11) s'appuyant sur l'échangeur de chaleur (6) au moins avec la protubérance (14).

3. Système de climatisation selon la revendication 1 ou 2,
le corps de base (11) présentant deux évidements (12), et
les deux évidements (12) étant agencés de manière symétrique par rapport à l'échangeur de chaleur (6).

4. Système de climatisation selon l'une des revendications 1 à 3,
l'évidement (12) présentant une ouverture latérale (12').

5. Procédé de fabrication d'un système de climatisation,
un échangeur de chaleur (6) étant inséré dans un corps de base (11) d'un dispositif de retenue (10), et
au moins un élément de serrage (13) étant inséré dans au moins un évidement (12) du corps de base (11) de telle sorte que le corps de base (11) et/ou l'élément de serrage (13) prend/prennent appui de manière étanche sur l'échangeur de chaleur (6),
**caractérisé en ce que** l'élément de serrage (13) est orienté dans l'évidement (12) de telle sorte que, dans une orientation relative entre l'élément de serrage (13) et l'évidement (12), le corps de base (11) est déformé de telle sorte que le corps de base (11) déformé s'appuie de manière étanche sur l'échangeur de chaleur (6), et dans une orientation alternative de l'élément de serrage (13) dans l'évidement (12), aucune déformation ou une déformation si faible du corps de base (11) se produit que le corps de base (11) ne s'appuie pas sur l'échangeur de chaleur (6).

6. Procédé selon la revendication 5,
l'élément de serrage (13) étant tourné pendant l'insertion de l'élément de serrage (13).
